# FASCICULE DE BREVET EUROPEEN

(11) **EP 1 188 933 B1**
(45) Date de publication et mention de la délivrance du brevet: **10.09.2008**
(21) Numéro de dépôt: 01402379.0
(22) Date de dépôt: 17.09.2001
(51) Int. Cl.: F04D 29/56, F01D 17/16

(54) **Dispositif de commande d'aubes à calage variable**
Steuervorrichtung für verstellbare Leitschaufeln
Controlling device for variable guide vanes

(30) Priorité: 18.09.2000 FR 0011857
(43) Date de publication de la demande: 20.03.2002
(73) Titulaire: SNECMA, 75015 Paris (FR)
(72) Inventeur: Caubet, Jean-Pierre, 77190 Dammarie-les-Lys (FR); Jean, Antoine, 77000 Melun (FR); Naudet, Jacky, 91070 Bondoufle (FR); Radeljak, Gabrijel, 93340 Le Raincy (FR); Riccioz, Sébastien, 93340 Le Raincy (FR)
(74) Mandataire: David, Alain

(56) Documents cités:
- EP-A- 0 298 894
- FR-A- 2 608 678
- FR-A- 2 746 141
- US-A- 2 671 634
- US-A- 2 999 630
- US-A- 4 979 874
- US-A- 5 601 401

## Description

### Domaine de l'invention

La présente invention concerne la commande d'aubes à angle de calage variable. Elle trouve une application particulière dans le domaine de l'aéronautique, notamment pour la commande des positions angulaires d'aubes directrices d'entrée d'air dans des compresseurs de turbomachines, telles que des turboréacteurs ou turbopropulseurs d'avions.

### Arrière-plan de l'invention

Les dispositifs connus pour la commande d'aubes à calage variable dans une turbomachine comportent habituellement un organe de commande sous forme d'un anneau entourant un carter de la turbomachine et une pluralité de leviers, ou biellettes, chaque biellette ayant une première extrémité reliée à l'anneau de commande par une articulation et une deuxième extrémité montée sur un pivot d'une aube respective.

La modification synchronisée de la position angulaire des aubes est réalisée par rotation de l'anneau autour de l'axe de la turbomachine. Afin de pouvoir suivre le mouvement de rotation de l'anneau, la liaison entre chaque biellette et l'anneau comprend au moins un degré de liberté en rotation autour d'un axe dirigé sensiblement radialement par rapport à l'anneau. Toutefois, la biellette étant montée rigidement sur le pivot de l'aube correspondante, la rotation de l'anneau induit d'autres mouvements relatifs entre l'anneau et la partie de la biellette montée sur le pivot de l'aube. Afin de s'accommoder de ces mouvements supplémentaires, ou d'au moins une partie d'entre eux, il est bien connu de réaliser la liaison sous forme d'une rotule ou d'une pièce analogue qui, outre la rotation autour d'un axe sensiblement radial par rapport à l'anneau, autorise une rotation autour d'un axe ayant une direction sensiblement circonférentielle par rapport à l'anneau. Il a aussi été proposé de réaliser une liaison offrant un degré de liberté supplémentaire en translation dans une direction sensiblement radiale par rapport à l'anneau. On pourra, entre autres, se référer aux documents FR-A-2 608 678 ou FR-A-2 746 141,US-A-2 999630.

L'utilisation d'articulations mécaniques de type rotule ou analogue dans un dispositif de commande d'un ensemble d'aubes, ou, simultanément, de plusieurs ensembles d'aubes, nécessite la réalisation d'un grand nombre de pièces pour un coût relativement élevé. En outre, de telles articulations sont sujettes à usure pouvant altérer le fonctionnement.

En variante, il a aussi été proposé de s'accommoder de ces mouvements, ou d'au moins une partie d'entre eux, par déformation élastique de la biellette. Il pourra être fait référence, entre autres aux documents US-A-4 367 264 et US-A-4 979 874.

Toutefois, dans ces documents, la capacité de déformation élastique est donnée par un amincissement de la biellette dans sa partie centrale, entre les extrémités reliées à l'anneau de commande et à un pivot d'une aube. Or, d'une part, il est nécessaire de conférer une flexibilité suffisante pour ne pas entraver la transmission de mouvement entre l'anneau de commande et les aubes et, d'autre part, on doit conserver une épaisseur de biellette suffisante pour résister à la fatigue et éviter le risque de flambage. Le meilleur compromis entre ces exigences contradictoires est délicat à trouver.

### Objet et résumé de l'invention

L'invention a pour but d'éviter les inconvénients des dispositifs de l'art antérieur en proposant un dispositif de commande utilisant une biellette flexible qui présente une très grande résistance à la fatigue mécanique provoquée par des actionnements répétés et une grande résistance au flambage, tout en présentant une flexibilité lui permettant de se déformer aisément en torsion, dans toute la plage de rotation de l'anneau de commande. Un autre but de l'invention est de proposer un dispositif qui permette d'en simplifier son montage et de permettre également un démontage individuel rapide et simple de ces biellettes. Encore un autre but de l'invention est de proposer un dispositif présentant un hystérésis particulièrement réduit au niveau de la liaison aube/biellette.

Ces buts sont atteints grâce à un dispositif du type comportant une biellette, des moyens de liaison formant articulation entre une première extrémité de la biellette et un anneau de commande, et des moyens de fixation d'une deuxième extrémité de la biellette sur un pivot d'une aube à commander, dispositif dans lequel, conformément à l'invention, lesdits moyens de liaison comportent un pivot traversant un premier orifice percé dans ladite première extrémité de la biellette et engagé dans un logement radial dudit anneau de commande, ledit pivot étant maintenu en position par un anneau de verrouillage muni de fenêtres (36) pour le passage de ce pivot et coulissant sur ledit anneau de commande, lesdits moyens de fixation comportent une vis de fixation traversant un second orifice percé dans ladite seconde extrémité de la biellette et introduite dans un trou dudit pivot de l'aube à commander, et ledit dispositif comporte en outre des moyens pour maintenir en rotation sans jeu ladite biellette sur ledit pivot d'aube.

Avec cette structure particulière, d'une part, le montage/démontage du dispositif est grandement facilité du fait de la nature monobloc (obtenue par la présence de l'anneau de verrouillage) de l'ensemble anneau de commande et biellettes, et d'autre part, le remplacement individuel des biellettes, sans démontage de l'anneau de commande, est rendu particulièrement aisé. En outre, le rattrapage de jeu automatique dans la liaison aube-biellette permet d'éviter, ou au moins de réduire considérablement, tout hystérésis.

Selon un mode de réalisation préférentiel, lesdits moyens de maintien sans jeu comportent une rainure radiale pratiquée dans ledit pivot d'aube et dont la largeur est inférieure à celle de ladite seconde extrémité de la biellette qu'elle est destinée à recevoir. Pour cela, ladite biellette est avantageusement cambrée autour de son axe longitudinal.

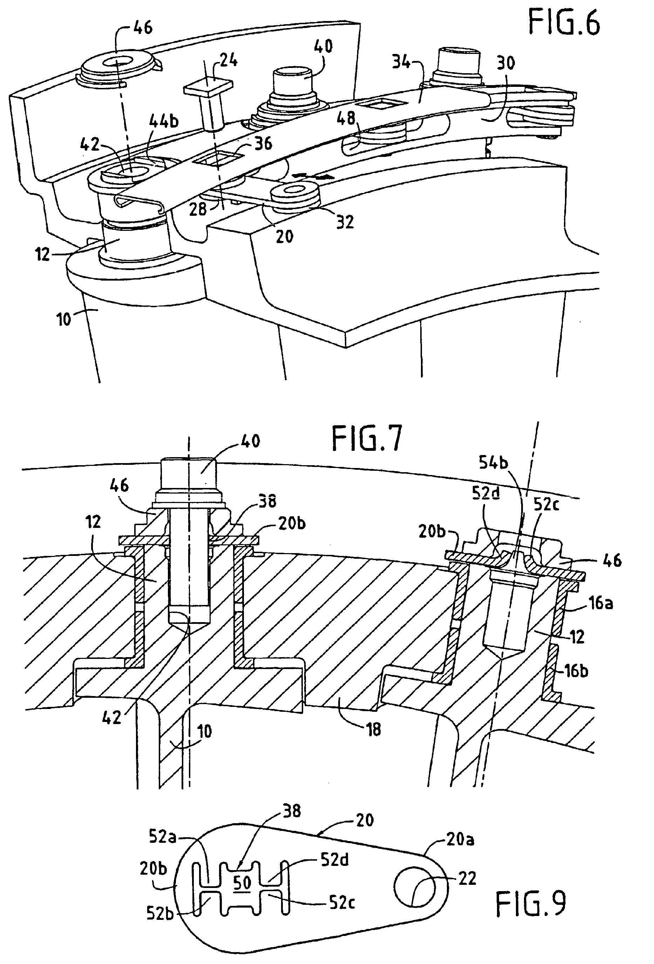

Selon un autre mode de réalisation de l'invention, lesdits moyens de maintien sans jeu comportent au moins un tenon pratiqués dans ledit pivot d'aube et destiné à coopérer avec des pattes découpées dans ladite seconde extrémité de la biellette. Cette découpe des pattes présente de préférence une configuration conforme à la figure 9.

Selon une particularité de l'invention, ladite biellette présente, au niveau de sa seconde extrémité, une partie ayant une largeur plus grande que celle de sa première extrémité et à laquelle elle se raccorde progressivement.

Pour notamment compenser le jeu entre la biellette et l'anneau de commande, ledit logement radial est délimité par une fourrure fixée dans ledit premier orifice de la biellette. De même, pour maintenir la biellette plaquée contre le pivot d'aube, il est prévu une butée interposée entre ladite seconde extrémité de la biellette et ladite vis de fixation.

Avantageusement, ladite biellette est constituée par une structure lamifiée comprenant des couches rigides minces, formées par des feuilles métalliques, alternant avec des couches d'élastomère, les couches adhérant les unes aux autres.

La présence d'une structure lamifiée confère à la biellette un comportement remarquable. Du fait de la minceur des couches métalliques, liées entre elles par des couches d'élastomère, la biellette est aisément déformable en flexion et torsion. De plus, il n'y a pas de variation importante de résistance à la déformation, dans toute la plage de fonctionnement de l'anneau de commande. La commande du calage des aubes est donc précise et aisée. En outre, en dépit de leur minceur, les couches métalliques forment avec les couches d'élastomère un ensemble présentant une très grande résistance à la fatigue et au flambage.

Dans un mode de réalisation préférentiel facilitant le montage/démontage des biellettes, lesdits anneaux de commande et de verrouillage sont chacun réalisés en deux parties s'étendant chacune sur 180° de la circonférence de la turbomachine.

### Brève description des dessins

L'invention sera mieux comprise à la lecture de la description faite, ci-après, à titre indicatif mais non limitatif, en référence aux dessins annexés, sur lesquels :
- la figure 1 est une vue en coupe à une échelle agrandie d'un premier mode de réalisation d'un dispositif de commande selon l'invention;
- la figure 2 est une vue en coupe selon le plan II-II de la figure 1;
- la figure 3 est une vue en coupe selon le plan III-III de la figure 1;
- la figure 4 représente en perspective le dispositif de commande de la figure 1;
- la figure 5 illustre une biellette flexible mise en oeuvre dans le dispositif de commande conforme à l'invention;
- la figure 6 montre en perspective des étapes successives de la mise en place du dispositif de commande de la figure 1;
- la figure 7 est une vue en coupe à une échelle agrandie d'un second mode de réalisation d'un dispositif de commande conforme à l'invention;
- la figure 8 est une vue en perspective du dispositif de commande de la figure 7; et
- la figure 9 illustre une biellette flexible mise en oeuvre dans le dispositif de commande conforme à l'invention.

### Description détaillée de modes préférentiels de réalisation

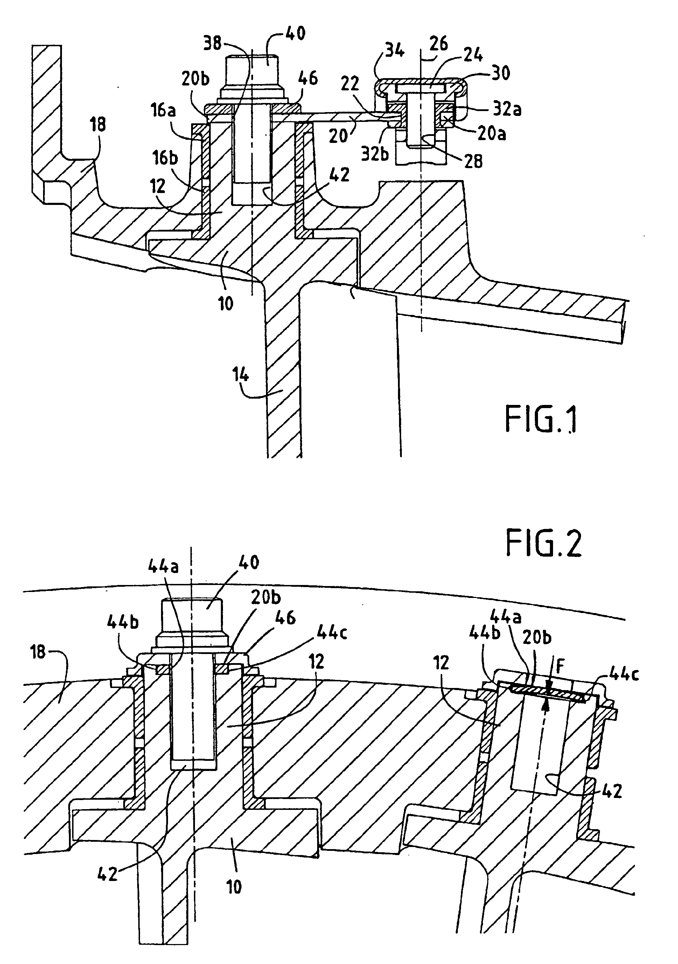

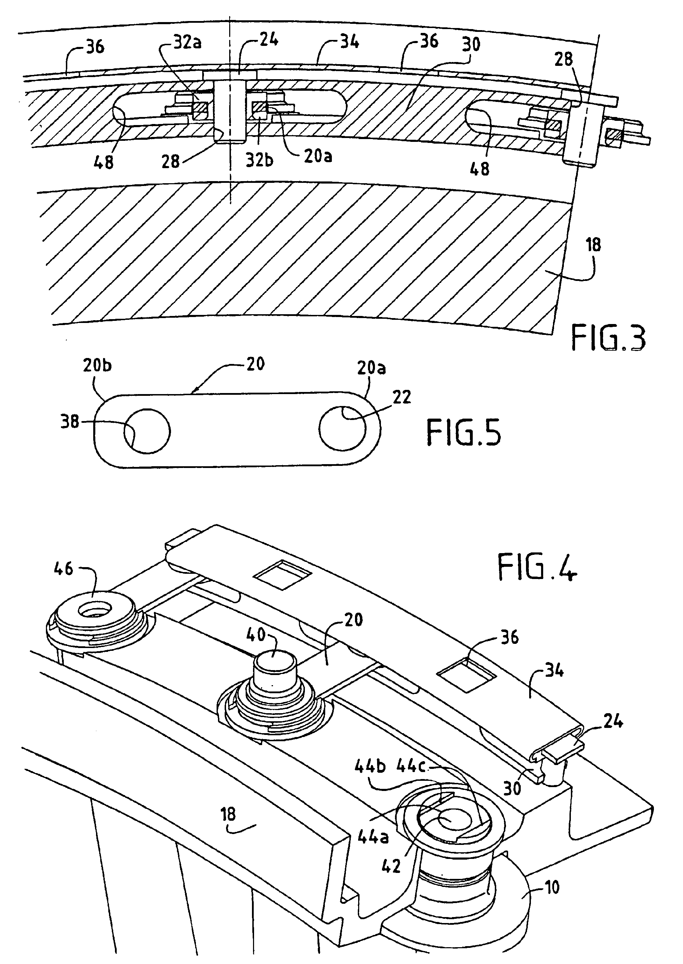

Les figures 1 à 3 illustrent en coupe et la figure 4 en perspective une partie de turbomachine, turboréacteur ou turbopropulseur d'avion ou tout autre générateur de puissance terrestre ou marin, par exemple l'une des aubes directrices réparties autour de l'axe de la turbomachine et placées en entrée de compresseur. Cette aube 10 est du type aube à angle de calage variable.

Chaque aube 10 est munie d'un pivot d'aube 12 d'axe 14 qui peut tourner à l'intérieur d'un palier lisse défini par une bague 16a, 16b traversant une partie de corps 18 de la turbomachine (en l'espèce une virole extérieure ou le carter du redresseur).

Le déplacement angulaire (calage) de chaque aube 10 est provoqué par une biellette flexible 20 (illustrée à la figure 5) comprenant de préférence une structure composite souple telle qu'une structure lamifiée constituée de couches métalliques minces alternant avec des couches d'élastomère, les couches adhérant les unes aux autres. Les couches métalliques sont formées par des feuilles de métal d'épaisseur de préférence inférieure à 0,5 mm, découpées dans des feuillards ou clinquants par exemple en acier, en inox, ou tout autre métal convenant pour l'application envisagée. De même, les couches d'élastomère sont formées par exemple en caoutchouc naturel, chloroprène, butadiène, nitrile, épichlorhydrine, silicone, etc., le choix étant effectué en fonction des caractéristiques mécaniques souhaitées et des conditions d'environnement.

A une première extrémité 20a, la biellette 20 comporte un premier orifice 22 destiné à recevoir des moyens de liaison formés par un pivot 24 d'axe 26 engagé dans un logement radial 28 d'un anneau de commande 30. Ce logement est avantageusement délimité par une fourrure 32 (ensemble de deux pièces serties, un manchon 32a et un anneau 32b) montée dans le premier orifice 22 formé à travers la biellette 20 et destinée d'une part à compenser le jeu entre la biellette et l'anneau de commande et d'autre part à procurer une longueur de centrage suffisante pour reprendre les efforts du pivot 24. Le pivot est maintenu en position par un anneau de verrouillage 34 coulissant sur l'anneau de commande et muni de fenêtres 36 de forme correspondant à celle de ce pivot (ou plus précisément de sa tête). A une deuxième extrémité 20b opposée à la première, la biellette 20 comporte un second orifice 38 destiné à recevoir des moyens de fixation formés par une vis de fixation 40 engagée dans un trou borgne taraudé 42 du pivot de l'aube 12. Cette biellette est rendue solidaire en rotation du pivot 12 et maintenue sans jeu dans le pivot d'aube en étant engagée dans une rainure radiale 44, de largeur inférieure à celle de la biellette, pratiquée dans ce pivot et dégageant une assise 44a pour la biellette et deux bords plats radiaux de positionnement 44b, 44c (figures 2 et 4). Une rondelle formant butée 46 est interposée entre l'extrémité 20b de la biellette et la vis de fixation 40.

L'anneau de commande 30, dont l'axe est confondu avec l'axe longitudinal de la turbomachine, est mobile en rotation autour de son axe. Il comporte une pluralité de lumières 48, en nombre égal à celui des aubes, percées radialement et de largeur sensiblement supérieure à celle d'une biellette. De préférence, il est réalisé en deux parties (2 demi-anneau) couvrant chacune 180° de la circonférence de la turbomachine. Ces parties sont reliées (verrouillées) entres elles par une férule de liaison (non représentée). L'entraînement en rotation est assuré classiquement par un ou plusieurs vérins (non représentés). La rotation de l'anneau de commande permet de faire varier la positon angulaire des aubes 10 via les biellettes 20. De même, l'anneau de verrouillage 34 est formé en deux parties couvrant chacune également 180°. Un ensemble unique sur 360° est bien entendu possible selon l'architecture de la turbomachine.

Le montage/démontage des aubes sera maintenant illustré en regard de la figure 6. Le montage s'effectue essentiellement en deux étapes.

Une première étape, qui peut être effectuée séparément en atelier (c'est un des avantages importants de l'invention), consiste à monter individuellement l'ensemble des biellettes 20 sur l'anneau de commande 30 et à les verrouiller par l'anneau de verrouillage 34. Pour cela, et pour chaque biellette, la fourrure 32 est montée par sertissage (d'autres techniques pourraient être utilisées pour la fixation de l'anneau 32b sur le manchon 32a ) dans le premier orifice 22 de la biellette puis l'ensemble est introduit au travers de la lumière 48 de l'anneau de commande 30. Le pivot 24 est alors introduit par la fenêtre 36 de l'anneau de verrouillage 34 et fixé à l'extrémité 20a de la biellette par une simple introduction de ce pivot dans la fourrure 32. Une fois toutes les biellettes installées, il ne reste plus qu'à tourner l'anneau de verrouillage, d'une distance égale à un demi-espace inter-aubes, pour que les pivots 24 se retrouvent automatiquement bloqués et solidaires de l'anneau de commande 30 formant ainsi un ensemble monobloc. Les deux parties de l'anneau coulissant 34 sont alors elles mêmes verrouillées, par exemple au moyen d'une ferrure (non représentée).

La seconde étape consiste alors, cette fois directement sur site, à monter tout l'ensemble ainsi constitué directement sur les différents pivots 12 des aubes 10. Pour cela, les extrémités 20b des biellettes sont placées une à une sur l'assise 44a de ce pivot et fixées chacune à celui-ci par la vis de fixation 40 via la rondelle butée 46. Le serrage de la rondelle butée 46 par la vis de fixation 40 permet de maintenir enserrées les couches de la structure lamifiée et d'éviter un décollage (délaminage) intempestif au niveau de la paroi interne du second orifice 38. La mise en place du pivot 24 à l'autre extrémité de la biellette produit le même effet au niveau de la paroi interne du premier orifice 22.

On notera, et ceci est un autre aspect important de l'invention, que, afin de permettre un rattrapage automatique du jeu entre le pivot d'aube et la biellette et ainsi limiter l'hystérésis propre à un tel assemblage et résultant des tolérances de fabrication, la biellette 20 présente une largeur à plat légèrement supérieure à celle de la rainure 44 comprise entre ses bords plats 44c, 44d. Pour faciliter son montage, la biellette sera avantageusement cambrée (autour de son axe longitudinal) lors de sa fabrication pour obtenir une flèche « f » telle qu'illustrée précédemment sur la figure 2. Toutefois, il est aussi possible d'envisager un montage sous légère contrainte avec une biellette de fabrication plate.

Le démontage se fait en procédant de façon exactement inverse. Toutefois, et c'est un autre avantage essentiel de l'invention, avec la structure décrite, il est possible de procéder à un démontage individuel de chaque biellette. Il suffit en effet, tout d'abord de démonter sa fixation 40, 46, puis de mettre en concordance les fenêtres 36 de l'anneau de verrouillage 34 avec les pivots 24 (bien entendu après avoir déverrouillé cet anneau) et d'extraire le pivot 24 correspondant à la biellette 20 à changer, et enfin de dégager cette biellette par la lumière 48 de l'anneau de commande 30. Une biellette neuve peut dès lors être remplacée simplement en procédant de façon inverse.

Les figures 7 à 9 illustrent un second mode de réalisation de l'invention selon lequel la biellette présente également une structure lamifiée mais avec une géométrie différente. En effet, d'une part la seconde partie d'extrémité 20b destinée à être raccordée avec le pivot d'aube 12, présente une largeur supérieure à celle de l'extrémité opposée 20a à laquelle elle se raccorde progressivement et, d'autre part, le second orifice 38 présente une découpe spécifique, non circulaire, visible particulièrement sur la figure 9 et destinée à réaliser un centrage, d'une part, et un guidage, d'autre part, de la biellette avec le pivot d'aube. Cette découpe présente de part et d'autre d'une zone centrale sensiblement rectangulaire 50 et de part et d'autre d'un axe central longitudinal de la biellette, des pattes 52a, 52b, 52c, 52d destinées à être repliées contre des tenons 54a, 54b émergeant de la partie supérieure du pivot d'aube 12. La zone centrale est destinée à assurer le centrage de la vis de fixation 40 dont l'axe s'inscrit parfaitement dans cette zone rectangulaire et les pattes une fois repliées contre les tenons sous l'action de la vis de fixation et de la rondelle-butée 46 assurent un guidage avec un rattrapage automatique du jeu entre la biellette et le pivot d'aube.

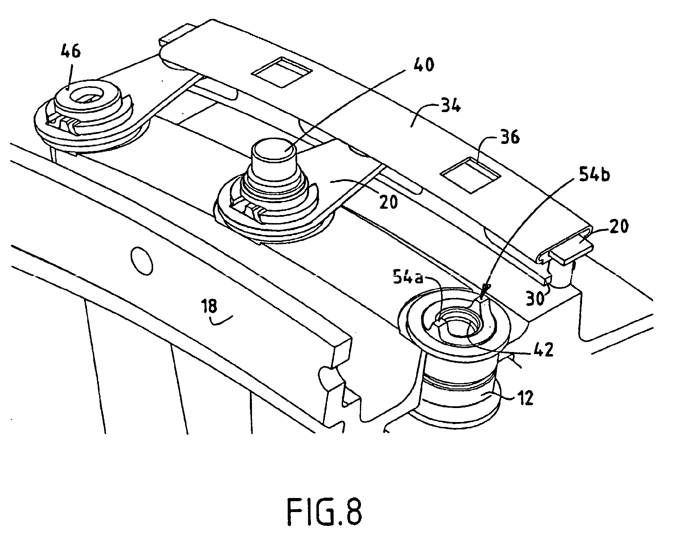

La figure 7 est une vue en coupe qui montre la fixation de la biellette à sa seconde extrémité 20b, avant et après la mise en place de la vis de fixation 40. Les éléments conformes au premier mode de réalisation portent les mêmes références. On peut remarquer l'action de déformation exercée par le tenon 54b sur les pattes 52c, 52d de la biellette 20 qui permet un maintien parfait et sans jeu de cette biellette. Enfin, la figure 8 illustre en perspective à trois étapes différentes la liaison de l'aube avec l'anneau de commande. On notera ici encore la présence des tenons dirigés radialement à la partie supérieure du pivot de l'aube. Le montage/démontage des biellettes globalement ou individuellement s'effectue comme dans le mode de réalisation précédent et il convient de s'y reporter.

Comme déjà indiqué, l'utilisation d'une structure composite souple telle une structure lamifiée est particulièrement avantageuse du fait qu'elle permet d'associer flexibilité et résistance mécanique dans toute la plage de fonctionnement. Une particularité intéressante réside dans le fait que la résistance à la déformation en torsion ne varie pas de façon importante dans cette plage, de sorte que la commande du calage des aubes peut être réalisée précisément.

## Revendications

1. Dispositif de commande d'aube à angle de calage variable dans une turbomachine, comportant
une biellette (20),
un anneau de commande (30),
un pivot d'aube (12) d'une aube à commander,
des moyens de liaison (24, 32) formant articulation entre une première extrémité (20a) de la biellette et ledit anneau de commande et comportant un pivot (24) traversant un premier orifice (22) percé dans ladite première extrémité de la biellette et engagé dans un logement radial (28) dudit anneau de commande,
et des moyens de fixation et de maintien en rotation sans jeu (40, 44, 46 ; 52, 54) d'une seconde extrémité (20b) de la biellette,
**caractérisé en ce que** ledit pivot (24) est maintenu en position par un anneau de verrouillage (34) muni de fenêtres (36) pour le passage de ce pivot et coulisse sur ledit anneau de commande, et
**en ce que** lesdits moyens de fixation comportent une vis de fixation (40) traversant un second orifice (38) percé dans ladite seconde extrémité de la biellette pour être introduite dans un trou dudit pivot d'aube.

2. Dispositif selon la revendication 1, **caractérisé en ce que** ladite biellette est cambrée autour de son axe longitudinal.

3. Dispositif selon la revendication 2, **caractérisé en ce que** ledit pivot d'aube comporte une rainure radiale (44) dont la largeur est inférieure à celle de ladite seconde extrémité de la biellette qu'elle est destinée à recevoir.

4. Dispositif selon la revendication 1, **caractérisé en ce que** ladite biellette comporte des pattes (52a, 52b ; 52c, 52d) découpées dans ladite seconde extrémité de la biellette.

5. Dispositif selon la revendication 4, **caractérisé en ce que** ledit pivot d'aube comporte au moins un tenon (54a et 54b) destiné à coopérer avec lesdites pattes découpées dans ladite seconde extrémité de la biellette.

6. Dispositif selon la revendication 3, **caractérisé en ce que** ladite découpe entourant lesdites pattes est formée de part et d'autre d'un axe central longitudinal de la biellette et de part et d'autre d'une zone centrale sensiblement rectangulaire (50) destinée à assurer un centrage de ladite vis de fixation.

7. Dispositif selon la revendication 6, **caractérisé en ce que** ladite biellette présente, au niveau de sa seconde extrémité (20b), une partie ayant une largeur plus grande que celle de sa première extrémité (20a) et à laquelle elle se raccorde progressivement.

8. Dispositif selon la revendication 1, **caractérisé en ce que** ledit logement radial est délimité par une fourrure (32a, 32b) fixée dans ledit premier orifice de la biellette.

9. Dispositif selon la revendication 1, **caractérisé en ce que** lesdits moyens de fixation comportent en outre une butée (46) interposée entre ladite seconde extrémité de la biellette et ladite vis de fixation.

10. Dispositif selon la revendication 1, **caractérisé en ce que** ladite biellette est constituée par une structure lamifiée comprenant des couches rigides minces, formées par des feuilles métalliques, alternant avec des couches d'élastomère, les couches adhérant les unes aux autres.

11. Dispositif selon l'une quelconque des revendications 1 à 10, **caractérisé en ce que** lesdits anneaux de commande et de verrouillage sont chacun réalisés en deux parties s'étendant chacune sur 180° de la circonférence de la turbomachine.

12. Turbomachine comportant un dispositif de commande d'aube à angle de calage variable selon l'une quelconque des revendications 1 à 11.

## Claims

1. Device for controlling a variable-pitch blade in a turbomachine, comprising:
a rod (20),
a control ring (30),
a blade pivot (12) of a blade that is to be controlled,
connecting means (24, 32) forming an articulation between a first end (20a) of the rod and said control ring, said means comprising a pivot (24) passing through a first orifice (22) pierced in said first end of the rod and engaged in a radial housing (28) of said control ring, and
means (40, 44, 46; 52, 54) for fixing and for holding a second end (20b) of the rod so that it can rotate without play,
the device being **characterised in that** said pivot (24) is held in position by a locking ring (34) which has openings (36) for the passage of this pivot and which slides on said control ring, and
**in that** said fixing means comprise a fixing screw (40) passing through a second orifice (38) pierced in said second end of the rod and introduced into a hole of said pivot of the blade.

2. Device according to claim 1, **characterised in that** said rod is curved about its longitudinal axis.

3. Device according to claim 2, **characterised in that** said blade pivot comprises a radial slot (44) the width of which is narrower than that of said second end of the rod that it is intended to accommodate.

4. Device according to claim 1, **characterised in that** said rod comprises tabs (52a, 52b; 52c, 52d) cut in said second end of the rod.

5. Device according to claim 4, **characterised in that** said blade pivot comprises at least one tenon (54a and 54b) intended to collaborate with said tabs cut in said second end of the rod.

6. Device according to claim 3, **characterised in that** said cutout around said tabs is formed on each side of a longitudinal central axis of the rod and on each side of an approximately rectangular central region (50) intended to centre said fixing screw.

7. Device according to claim 6, **characterised in that** said rod has, at its second end (20b), a part which is wider than its first end (20a) and to which it gradually connects.

8. Device according to claim 1, **characterised in that** said radial housing is delimited by a liner (32a, 32b) fixed into said first orifice of the rod.

9. Device according to claim 1, **characterised in that** said fixing means further comprise a stop (46) inserted between said second end of the rod and said fixing screw.

10. Device according to claim 1, **characterised in that** said rod is made of a laminated structure comprising thin rigid layers, formed of metal sheet, alternating with layers of elastomer, the layers being bonded together.

11. Device according to any one of claims 1 to 10, **characterised in that** said control and locking rings are each made in two parts, each extending over 180° of the circumference of the turbomachine.

12. Turbomachine including a device for controlling a variable-pitch blade according to any one of claims 1 to 11.

## Patentansprüche

1. Vorrichtung zur Steuerung einer Schaufel mit variable Einstellwinkel in einer Turbomaschine, mit:
einem Schwingarm (20),
einem Verstellring (30),
einem Schaufeldrehzapfen (12) einer zu steuernden Schaufel,
Verbindungsmitteln (24, 32), die ein Gelenk zwischen einem ersten Ende (20a) des Schwingarms und dem Verstellring bilden und die einen Drehzapfen (24) umfassen, der eine in dem ersten Ende des Schwingarms ausgebildete erste Öffnung (22) durchgreift und in eine radiale Aufnahme (28) des Verstellrings eingesteckt ist,
und Mitteln (40, 44, 46; 52, 54), um ein zweites Ende (20b) des Schwingarms zu befestigen und spielfrei drehfest zu halten,
**dadurch gekennzeichnet, daß** der Drehzapfen (24) durch einen Verriegelungsring (34), der mit Aussparungen (36) für den Durchgang dieses Drehzapfens ausgestattet ist und auf dem Verstellring gleitet, in Position gehalten wird, und
daß die Befestigungsmittel eine Befestigungsschraube (40) umfassen, die eine in dem zweiten Ende des Schwingarms ausgebildete zweite Öffnung (38) durchgreift, um in ein Loch des Schaufeldrehzapfens eingeführt zu werden.

2. Vorrichtung nach Anspruch 1, **dadurch gekennzeichnet, daß** der Schwingarm um seine Längsachse gebogen ist.

3. Vorrichtung nach Anspruch 2, **dadurch gekennzeichnet, daß** der Schaufeldrehzapfen eine Radialnut (44) aufweist, deren Breite geringer ist als die des zweiten Endes des Schwingarms, das sie aufnehmen soll.

4. Vorrichtung nach Anspruch 1, **dadurch gekennzeichnet, daß** der Schwingarm Laschen (52a, 52b; 52c, 52d) aufweist, die aus dem zweiten Ende des Schwingarms ausgeschnitten sind.

5. Vorrichtung nach Anspruch 4, **dadurch gekennzeichnet, daß** der Schaufeldrehzapfen wenigstens eine Nase (54a und 54b) aufweist, die dazu bestimmt ist, mit den aus dem zweiten Ende des Schwingarms ausgeschnittenen Laschen zusammenzuwirken.

6. Vorrichtung nach Anspruch 3, **dadurch gekennzeichnet, daß** der die Laschen umgebende Ausschnitt auf beiden Seiten einer Mittellängsachse des Schwingarms sowie auf beiden Seiten eines im wesentlichen rechteckigen mittleren Bereichs (50), welcher dazu bestimmt ist, ein Zentrieren der Befestigungsschraube zu gewährleisten, gebildet ist.

7. Vorrichtung nach Anspruch 6, **dadurch gekennzeichnet, daß** der Schwingarm im Bereich seines zweiten Endes (20b) einen Teil aufweist, der breiter ist als sein erstes Ende (20a) und an den es sich nach und nach anschließt.

8. Vorrichtung nach Anspruch 1, **dadurch gekennzeichnet, daß** die radiale Aufnahme durch ein in der ersten Öffnung des Schwingarms befestigtes Futter (32a, 32b) begrenzt ist.

9. Vorrichtung nach Anspruch 1, **dadurch gekennzeichnet, daß** die Befestigungsmittel ferner einen Anschlag (46) umfassen, der zwischen dem zweiten Ende des Schwingarms und der Befestigungsschraube eingefügt ist.

10. Vorrichtung nach Anspruch 1, **dadurch gekennzeichnet, daß** der Schwingarm aus einer Schichtstruktur besteht, die dünne, starre, von Metallfolien gebildete Schichten aufweist, die sich mit Elastomerschichten abwechseln, wobei die Schichten aneinander haften.

11. Vorrichtung nach irgendeinem der Ansprüche 1 bis 10, **dadurch gekennzeichnet, daß** der Verstellring und der Verriegelungsring jeweils aus zwei Teilen gefertigt sind, die sich jeweils über 180° des Umfangs der Turbomaschine erstrecken.

12. Turbomaschine mit einer Vorrichtung zur Steuerung einer Schaufel mit variablem Einstellwinkel nach irgendeinem der Ansprüche 1 bis 11.
